(19) Europäisches Patentamt
European Patent Office
Office européen des brevets

(11) **EP 2 559 546 B1**

(12) **EUROPÄISCHE PATENTSCHRIFT**

(45) Veröffentlichungstag und Bekanntmachung des Hinweises auf die Patenterteilung:
**23.10.2019 Patentblatt 2019/43**

(51) Int Cl.:
***B29C 55/08*** *(2006.01)* ***B29C 48/08*** *(2019.01)*

(21) Anmeldenummer: **12005898.7**

(22) Anmeldetag: **16.08.2012**

(54) **Verfahren und Vorrichtung zum Herstellen einer Folie aus thermoplastischem Kunststoff, sowie damit hergestellte Folie**

Method and device for manufacturing a film of thermoplastic material and film obtained by the method

Procédé et dispositif de fabrication d'une feuille en matière thermoplastique et feuille obtenue par le procédé

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **17.08.2011 EP 11177871**

(43) Veröffentlichungstag der Anmeldung:
**20.02.2013 Patentblatt 2013/08**

(73) Patentinhaber: **Reifenhäuser GmbH & Co. KG Maschinenfabrik**
**53844 Troisdorf (DE)**

(72) Erfinder:
• **Meyer, Helmut**
**53842 Troisdorf (DE)**

• **Hennes, Jochen**
**53757 Sankt Augustin (DE)**

(74) Vertreter: **Farago-Schauer, Peter Andreas**
**FARAGO Patentanwälte**
**Thierschstrasse 11**
**80538 München (DE)**

(56) Entgegenhaltungen:
WO-A1-2006/126717    WO-A1-2007/034029
DE-A1- 2 361 368    JP-A- H 051 165
JP-A- H03 158 225    US-A- 4 333 907
US-A- 5 833 904

EP 2 559 546 B1

**Beschreibung**

Die Erfindung betrifft ein Verfahren zum Herstellen einer Folienbahn aus thermoplastischem Kunststoff. Insbesondere betrifft die Erfindung ein solches Verfahren, bei welchem der thermoplastische Kunststoff in mindestens einer Schicht als Kunststoffschmelze aus einer Breitschlitzdüse in einer Extrusionsrichtung extrudiert und anschließend über mindestens eine Walze abgeführt wird, wobei Zugkräfte in Extrusionsrichtung und quer zur Extrusionsrichtung ausgeübt werden, um die Folienbahn längs und quer zu verstrecken.

Die Erfindung betrifft ferner eine Vorrichtung zum Herstellen einer solchen Folienbahn.

Außerdem betrifft die Erfindung eine damit hergestellte Folienbahn.

Beim Herstellen von Folienbahnen aus thermoplastischem Kunststoff mittels Extrusion einer Schmelze unterscheidet man im Wesentlichen zwei verschiedene Verfahren, nämlich einerseits die Herstellung von Flachfolie aus Breitschlitzdüsen, andererseits die Herstellung von Blasfolie aus Rundschlitzdüsen.

Bei der Flachfolienherstellung unter Einsatz einer Breitschlitzdüse wird die aus der Breitschlitzdüse austretende Schmelze mittels Kühlwalzen auf eine bestimmte Dicke ausgezogen und abgekühlt. Dabei werden Transparenz, Glanz und einige mechanische Eigenschaften der Folie stark beeinflusst. Typischerweise erhält die gewonnene Folienbahn eine Orientierung der Polymerketten in Extrusionsrichtung, was zu anisotropen Eigenschaften der Folienbahn führt. Entsprechende Verfahren sind beispielsweise aus der EP 0 319 401 B1, aus der US 5,709,932 oder der EP 1 900 498 A1 bekannt.

Die US 2007/267774 A1 offenbart eine Anlage zum Extrudieren einer Folienbahn aus einer Breitschlitzdüse. Die extrudierte Schmelze wird auf eine Kühlwalze aufgebracht, umläuft diese und kristallisiert während des Kontakts mit der Oberfläche der Kühlwalze. In Form einer festen Folie wird sie von der Kühlwalze abgenommen und durchläuft anschließend zunächst einen Längsstreckbereich, anschließend einen Querstreckbereich, bis sie schließlich aufgewickelt wird.

Die internationale Patentanmeldung WO 2007 / 034029 A1 zeigt ebenfalls eine Anlage zum Extrudieren einer Folienbahn aus einer Breitschlitzdüse. Eine Folie wird mittels eines Extruders aus Kunststoffmaterial extrudiert. In den Kunststoff der Kunststofffolie wird vor der Extrusion Material eingemischt, so dass sich in den in den Kunststoff eingemischten Materialpartikeln Kavitationsblasen bilden, wenn die Kunststofffolie gestreckt wird. Die Folie wird durch Strecken orientiert. Nach der Extrusion wird die Kunststofffolie vor der Orientierung langsam unter den Kristallisationspunkt des Kunststoffmaterials abgekühlt.

Im Gegensatz dazu wird beim Blasfolienverfahren, also dem Extrudieren einer aus einem ringförmigen Werkzeug austretenden und nachfolgend zu einem Schlauch ausgeformten Kunststoffschmelze, während der sogenannten Schlauchbildungszone die Schmelze längs und quer gezogen. Dies geschieht oberhalb des Schmelzbereichs der extrudierten Polymere, also in Schmelzeform. Die Folie wird von einem Abzug schneller abgezogen als sie extrudiert wird. Dadurch wird die Folie in Längsrichtung verstreckt. Durch das Aufblasen wird die Folie zusätzlich in Querrichtung verstreckt. Es resultiert somit eine biachsial verstreckte Folie, welche allerdings wegen des weniger stark forcierten Abkühlens zum Beispiel in den optischen Eigenschaften gegenüber der Flachfolie Nachteile aufweist.

Die US 3,471,606 hat vor knapp 50 Jahren vorgeschlagen, die aus einer Breitschlitzdüse extrudierte Folie zunächst in eine Anordnung zweier Endloskettenpaare einzubringen. Die Endloskettenpaare sind höhen- und winkelverstellbar an Folientransportvorrichtungen angeordnet. Insbesondere können sie in Extrusionsrichtung, im gezeigten Beispiel also nach unten, divergierend gestellt werden, sodass die frisch extrudierte Folie beim Durchlaufen der Endloskettenpaare seitlich gegriffen und dabei quer verstreckt wird. Anschließend kann eine optionale Kühlwalze vorgesehen sein, mit welcher ein Längsverstrecken durchgeführt werden kann. Im Normalfall führt die US 3,471,606 die Folienbahn in Form von Schmelze durch die Endloskettenpaare, damit das Querverstrecken bei schmelzeförmiger Folienbahn durchgeführt werden kann, also mit einer Temperatur oberhalb des Schmelzbereichs.

Der vorliegenden Erfindung liegt die Aufgabe zugrunde, den Stand der Technik zu verbessern oder ihm eine Alternative anzubieten.

Gemäß einem ersten Aspekt der Erfindung löst die gestellte Aufgabe ein Verfahren zum Herstellen einer Folienbahn aus thermoplastischem Kunststoff, bei welchem der Kunststoff in einer Schicht aus einer Breitschlitzdüse in einer Extrusionsrichtung extrudiert und später über eine Walze abgeführt wird, wobei auf die Folienbahn Zugkräfte in Extrusionsrichtung und quer zur Extrusionsrichtung ausgeübt werden, um die Folienbahn längs und quer zu verstrecken, und wobei die Schicht alternativ einen folienförmigen oder einen schmelzeförmigen Zustand annehmen kann, wobei sich der folienförmige Zustand bei einem Abkühlen der Schicht unter einen Schmelzbereich einstellt bzw. wobei sich der schmelzeförmige Zustand bei einem Erwärmen der Schicht über einen Schmelzbereich einstellt, wobei die Folienbahn (a) zunächst schmelzeförmig mit einer Extrusionsgeschwindigkeit extrudiert und (b) direkt anschließend schmelzeförmig auf eine Kühlwalzenanordnung geführt wird, wobei die Folienbahn um eine Kühl- oder Glättwalze herum mit einer höher als die Extrusionsgeschwindigkeit liegenden Umfangsgeschwindigkeit geführt wird, sodass die Folienbahn einem Längsstrecken unterworfen wird, (c) später aus der Kühlwalzenanordnung herausgeführt und (d) danach einem Querstrecken unterworfen wird, wobei beide Streckschritte an der Schicht mit schmelzeförmigem Zustand durchgeführt werden, sodass beide Male das Strecken in Form eines Ziehens von Schmelze erfolgt.

Begrifflich sei hierzu folgendes erläutert: "Thermoplastische Kunststoffe" sind allgemein bekannt. In der Praxis der Folienbahnherstellung sind die meistverwendeten Polymerverbunde mit oder aus Polypropylen (PP), Polyethylen (PE, HDPE, LDPE), Polyacryl (PA), Polystyrol (PS) oder Polyvinylchlorid (PVC).

Im Rahmen der hier vorliegenden Erfindung kann generell von einem Polymerverbund gesprochen werden.

Die Extrusion der Folienbahn soll "in mindestens einer Schicht" erfolgen. Das Extrudieren einer einschichtigen Folie ist in der Praxis der wohl einfachste Fall. Es können aber auch mehrere Schichten gleichzeitig extrudiert werden. In diesem Fall liegt die Erfindung schon dann vor, wenn nicht notwendigerweise der gesamte Polymerverbund mit jeder seiner Schichten schmelzeförmig längs und quer verstreckt wird, sondern schon dann, wenn auch nur für eine Schicht diese Bedingung erfüllt wird.

Bevorzugt wird die Folienbahn jedoch längs und quer gestreckt, während mehrere oder sogar alle Schichten einer mehrschichtigen Folienbahn im schmelzeförmigen Zustand vorliegen.

Im Sinne der hier vorliegenden Anmeldung wird unter einer Längsverstreckung der Folienbahn eine Verstreckung in Extrusionsrichtung verstanden, d. h. eine Verstreckung in derjenigen Richtung, in welche die Folienbahn aus der Breitschlitzdüse austritt und nachfolgend durch die weiteren Anlagenteile weiter transportiert wird, während unter einer Querverstreckung eine um 90° gegenüber der Extrusionsrichtung gedrehte Verstreckung verstanden wird.

Generell sei daraufhingewiesen, dass im Rahmen dieser Patentanmeldung unbestimmte Artikel und unbestimmte Zahlenwörter als "mindestens"-Angaben zu verstehen sein sollen. Wann immer also von "einem", "zwei" usw. gesprochen wird, ist dies jeweils als eine mindestens-Angabe zu verstehen, sofern sich nicht aus dem jeweiligen Kontext etwa ergibt, dass dort nur "genau ein", "genau zwei" usw. gemeint sein soll.

Das Wort "Verstrecken" ist im Rahmen dieser Anmeldung als ein Oberbegriff zu verstehen. Erfolgt das Verstrecken an einer kristallisierten Folienbahn, also einer Folienbahn in folienförmigem Zustand, dann wäre unterhalb des Oberbegriffs von einem "Recken" zu sprechen. Erfolgt das Verstrecken hingegen an der Folienbahn in schmelzeförmigem Zustand, bevorzugt an der hochviskosen Schmelze, also mit einer Temperatur oberhalb des Schmelzbereichs und unterhalb eines Übergangs in gasförmigen Zustand, dann sei von einem "Ziehen" gesprochen.

Der "Schmelzbereich" soll mit einfachen Worten ausgedrückt derjenige Temperaturbereich oder diejenige Temperatur sein, unterhalb welcher die extrudierte Schicht nicht mehr als Schmelze vorliegt, sondern vielmehr als erstarrte Folie. Bei der Flachfolienherstellung findet dieser Eigenschaftswechsel üblicherweise auf einer direkt nach der Breitschlitzdüse angeordneten Kühlwalze einer Kühlwalzenanordnung statt, wobei die Kühlwalzenanordnung entweder eine einfache Kühlwalze oder ein Glättwerk umfasst.

Liegt die Temperatur des Kunststoffs oberhalb des Schmelzbereichs, dann nimmt der Kunststoff den schmelzeförmigen Zustand an. Liegt sie hingegen unterhalb des Schmelzbereichs, dann nimmt der Kunststoff den folienförmigen Zustand an. Dazwischen liegt ein indifferenter Bereich.

Zwischen dem schmelzeförmigen und dem folienförmigen Zustand lässt sich dadurch unterscheiden, dass die Rückstellung zum Ursprungszustand nach einer schnellen, kurzen Verformung betrachtet wird: Bei einer Schmelze ist die Rückstellung bei relaxierter Verformung deutlich kleiner als bei einer Folie. Eine Schmelze fließt, eine Folie hingegen fließt kaum.

Im Feder-Dämpfer-Modell nach Maxwell hat die Schmelze fast keine Feder, sondern nur einen schwachen Dämpfer.

Bei einigen thermoplastischen Kunststoffen ist eine Kristallisation zu beobachten. Hier kommt es beim Erstarren der Schmelze zu einer partiellen Ordnung der Molekülketten im Polymer. Ausgehend von Kristallisationskeimen lagern sich die Molekülketten aneinander und bilden sogenannte Lamellen.

Die Kristallitbildung ist abhängig von den Abkühlbedingungen, den additiven und den Füllstoffen im Polymer sowie von den Strömungsbedingungen während des Erstarrens. Auch ein nachträgliches Verstrecken ändert die Anordnung der Moleküle und damit die Eigenschaften des Materials.

Nach wie vor sind viele Phänomene rund um die Kristallisation von polymeren Werkstoffen nicht endgültig verstanden oder gar nachgewiesen. Verschiedene Modelle wurden durch experimentelle Befunde gestützt und haben sich durchgesetzt.

Alle Polymere sind aus sehr langen Molekülketten aufgebaut. Thermoplastische Polymere zeichnen sich dadurch aus, dass sie bei Temperaturerhöhung schmelzen. In der Schmelze sind die Molekülketten unregelmäßig in Form von Knäueln angeordnet, welche einander vielfältig durchdringen. Bei vielen thermoplastischen Polymeren bleibt diese Unordnung bei der Abkühlung als amorphe Struktur im erstarrten Festkörper erhalten. Kühlt man hingegen die Schmelze eines teilkristallinen Polymers ab, so bewegen sich die Ketten immer weniger und beginnen sich regelmäßig anzuordnen. Es kommt zu einer Ausbildung von Ordnungszuständen, was als Kristallisation bezeichnet wird.

Bei der Kristallisation von Polymeren lagern sich Abschnitte der Molekülketten parallel aneinander. Energetisch am günstigsten wäre es, wenn die Moleküle über die gesamte Länge der Molekülkette parallel angeordnet wären. Da die Molekülketten in der Schmelze jedoch als miteinander verschlungene Knäuel vorliegen, ist diese Ordnung in der Realität nicht oder nur unter sehr hohem Druck erreichbar. Es bilden sich daher in der Praxis Kristallite aus gefalteten Molekülketten, welche die Grundstrukturen größerer Struktureinheiten bilden, beispielsweise Lamellenstrukturen. Die Ordnung ist dabei nicht als vollständig anzusehen. Jeder Kristallit besteht daher aus geordneten (kristallinen) und ungeordneten (amorphen) Teilbereichen.

Generell unterscheiden sich thermoplastische Kunststoffe von niedermolekularen festen Substanzen in ihrem Verhalten beim Erwärmen. Alle reinen, definierten organischen Stoffe mit kleiner oder niedriger Mol-Masse zeigen einen festen Schmelzpunkt. Bei einer bestimmten Temperatur, welche sich auf zehntel Grade genau ermitteln lässt, gehen die Substanzen vom festen in den flüssigen Zustand über.

Thermoplaste hingegen weisen einzelne Polymerketten unterschiedlicher Länge und unterschiedlicher Verzweigungen auf. Die Polymere zeigen deshalb keinen scharfen Schmelzpunkt, sondern einen sogenannten "Schmelzbereich". Sie werden bei höheren Temperaturen weich und plastisch. Die zähflüssige Schmelze lässt sich verformen und geht beim Abkühlen wieder in den festen Zustand über.

Anhaltspunkte für die Verarbeitungstemperaturen sind deshalb die Schmelzbereiche der Polymere. Sie liegen für Polyethylene beispielsweise bei 110 °C bis 135 °C, für Polypropylen um 165 °C, für Polyethylenterephthalat und Polykarbonat bei etwa 260 °C. Polyvinylchlorid schmilzt bei etwa 160 °C unter beginnender Zersetzung.

Quantitative Aussagen über die kristallinen Bereiche eines Thermoplasten sind durch die Bestimmung des Kristallitschmelzpunktes möglich. Für die amorphen Anteile ist die Glasübergangstemperatur die entsprechende Größe. Unter Glasübergang versteht man die reversible Veränderung eines hochpolymeren Stoffes aus einem spröden, harten, glasartigen Zustand zu einem flexiblen, weichen, elastischen Verhalten. Der Übergang findet beim Erwärmen in einem engen Temperaturbereich statt, nämlich der Glasübergangstemperatur. Die Bezeichnung "Einfriertemperatur" ist synonym zu verstehen und beschreibt den gleichen Vorgang beim Abkühlen eines Polymers. Der Glasübergang ist für die mechanischen Eigenschaften von Kunststoffen von besonderer Bedeutung. Da die meisten für die Folienherstellung verwendeten Polymere sowohl amorphe als auch kristalline Bereiche haben, sind Glasübergangstemperatur und Kristallitschmelzpunkt wichtige Größen für die Verarbeitung und Anwendung von Folien.

Der Schmelzbereich eines Polymers lässt sich in der Schubmodulkurve mitunter nicht genau bestimmen. In der sogenannten DSC-Kurve, also dem Auftragen des endothermen Wärmestroms bzw. des exothermen Wärmestroms über der Temperatur, ist der Schmelzbereich dagegen gut durch ein ausgeprägtes Maximum zu identifizieren.

Am Beispiel von Polypropylen kann davon ausgegangen werden, dass sich das ausgeprägte Maximum während eines Aufheizens des Polymers bei etwa 160 °C bis 170 °C einstellt. Man bezeichnet diesen Bereich auch als den Kristallitschmelzbereich.

Beim Abkühlen des Polypropylen zeigt sich ein exothermes Maximum bei etwa 115 °C.

In einer erweiterten Betrachtung im Rahmen der hier vorliegenden Patentanmeldung sei der "Schmelzbereich" als der Temperaturbereich zwischen dem Kristallitschmelzbereich und der Rekristallisationstemperatur aufgefasst. In einer engeren Betrachtung sei nur der Kristallitschmelzbereich oder die Rekristallisationstemperatur als der Schmelzbereich aufzufassen. Wird die extrudierte Schmelze während beider Verstreckprozesse oberhalb der Kristallitschmelztemperatur gehalten, so kann das biachsiale Verstrecken sicher schmelzeförmig erfolgen.

Auch ein Unterschreiten der Kristallitschmelztemperatur ist denkbar, ohne die vorteilhaft verarbeitbaren Eigenschaften der Schmelze zu verlieren, solange sich die Schmelze noch oberhalb der Rekristallisationstemperatur befindet.

Die "Folienbahn" kann folienförmig oder schmelzeförmig vorliegen, "Folienbahn" ist hier als ein Oberbegriff zu "Schmelze" und "Folie" zu verstehen.

Dass die Folienbahn "später" aus der Kühlwalzenanordnung herausgeführt und "danach" einem Querstrecken unterworfen wird, sei jeweils als ein "beliebig später" bzw. als ein "beliebig danach" zu verstehen. Es kann sich also, muss sich aber nicht, "unmittelbar", also "direkt", anschließen.

Von Vorteil erreicht die Erfindung mit ihrem ersten Aspekt, dass ein Prozess mit einregelbaren optischen und mechanischen Eigenschaften für die Folienbahn durchgeführt werden kann: Weil beide Streckschritte durchgeführt werden, während die Schicht der Folienbahn schmelzeförmig ist, können biachsial verstreckte Folien ohne großen Anlagen- und Kraftaufwand hergestellt werden.

Die Folienbahn wird zwischen dem Extrusionsschritt und dem Längsstrecken in der Kühlwalzenanordnung schmelzeförmig gehalten. Die Folienbahn ist beim Austreten aus der Breitschlitzdüse ohnehin heiß und zwingend schmelzeförmig. Es wird also vorgeschlagen, diese erste Wärme beizubehalten und sogleich das Längsstrecken in der Kühlwalzenanordnung vorzunehmen. Es müssen dann weder Aufheizmaßnahmen noch übermäßige Temperaturerhaltungsmaßnahmen durchgeführt werden.

Die Erfindung möchte, dass die Schmelze zunächst einem Längsstrecken und erst anschließend einem Querstrecken unterworfen wird. Beide Verstreckschritte sollen erfindungsgemäß durchgeführt werden, während die Schicht der Folienbahn noch als Schmelze vorliegt, obwohl bekanntlich gerade das schnelle, starke Abkühlen der Schmelze an der Kühlwalze der Kühlwalzenanordnung für die überragenden optischen Eigenschaften einer im Flachfolienextrusionsverfahren hergestellten Folienbahn sorgt.

Während die US 3,471,606 mit der zunächst durchgeführten Querverstreckung relativ stark eingeschränkt ist, hat die hier vorliegende Erfindung gezeigt, dass es deutlich von Vorteil ist, wenn zunächst das Längsverstrecken durchgeführt wird. So ist es insbesondere möglich, das Längsverstrecken sofort nach der Breitschlitzdüse mittels einer Walze vorzunehmen, wobei dies bevorzugt eine Kühlwalze sein kann. Bei einem solchen Aufbau unterscheidet sich die Anlage bis dorthin nicht wesentlich von einer herkömmlichen Flachfolienextrusionsanlage. Es ist somit je nach gewünschtem Folienergebnis einregelbar, ob der Prozess eher mit einem schnellen Abkühlen oder eher mit einem langsamen oder nur geringen Abkühlen vor dem Querverstrecken durchgeführt werden soll.

In einer möglichen Ausführung wird die Folienbahn auf der Kühlwalze und bis zum Querstreckschritt in einer Temperatur oberhalb des Schmelzbereichs gehalten.

In einer bevorzugten Ausführung wird die Folienbahn auf der Kühlwalze bis zum folienförmigen Zustand abgekühlt und in diesem Zustand leichter als in Schmelzform von der Kühlwalze abgelöst.

Es sei daraufhingewiesen, dass die hier vorliegende Erfindung sowohl mit einer einfachen Kühlwalze als auch mit einem Glättwerk durchgeführt werden kann, wobei es im Falle eines Glättwerks belanglos sein kann, ob auf die Kühlwalze oder auf die Gegenwalze extrudiert wird. Im Rahmen der hier vorliegenden Anmeldung wird teils der besseren Lesbarkeit halber einfach nur von der Kühlwalze gesprochen. Es sei dann jeweils als die "einfache Kühlwalze oder Glättwerkswalze" verstanden, sofern nicht aus dem Kontext etwas gegenteiliges hervorgeht.

Bevorzugt wird zum Ablösen der Folienbahn von der Kühlwalze eine Ablösevorrichtung eingesetzt, insbesondere mit einem Druckluft- oder Saugmittel. Je stärker das Ablösen der Folienbahn von der Kühlwalze unterstützt wird, desto wärmer kann die Folienbahn von der Kühlwalze ablaufen gelassen werden. Es ist dann weniger Heizenergie notwendig, um die Folienbahn für das Querstrecken in den schmelzeförmigem Zustand zu bringen oder dort zu halten.

Die mindestens eine Schicht der Folienbahn kann während der beiden Streckschritte eine höher als ihre Schmelztemperatur liegende Temperatur aufweisen, damit sich die Streckschritte als ein Ziehen darstellt, also ein Verstrecken der schmelzeförmigen Schicht bzw. im Idealfall der schmelzeförmigen gesamten Folienbahn. Hierfür sind keine hohen Kräfte notwendig, sodass die Anlage insgesamt recht kostengünstig und kompakt bauen kann.

Es wurde bereits erwähnt, dass die Schicht der Folienbahn während der beiden Streckschritte auch eine höher als ihre Rekristallisationstemperatur liegende Temperatur aufweisen kann. Diese wird im Regelfall niedriger liegen als die Kristallitschmelztemperatur. Im Korridor zwischen diesen beiden Temperaturen wird die Schicht der Folienbahn jedoch als Schmelze vorliegen, solange vorher nicht die Rekristallisationstemperatur erreicht wurde, ohne dass dazwischen nochmals die Kristallitschmelztemperatur erreicht wurde.

Es ist insbesondere denkbar, die Kühlwalze zum Kühlen der Schmelze auf eine Temperatur einzusetzen, welche zwar deutlich niedriger ist als die Extrusionstemperatur, aber dennoch oberhalb oder im Schmelzbereich liegt. Auch ist es ohne weiteres möglich, über die Temperatur der Kühlwalze einzustellen, inwieweit die Folienbahn nach dem Extrusionsschritt abgekühlt werden soll, oder inwieweit die Folie eher heiß belassen werden soll. Die resultierende Temperatur der Folienbahn nach der Kühlwalze wird insbesondere durch die Walzentemperatur, die Kontaktfläche und die Kontaktdauer beeinflusst.

Die Temperatur der Kühlwalze beeinflusst während des laufenden Verfahrens besonders leicht regelbar die Kristallitgröße und damit die Eigenschaften der Folien. Bei heutigen Anlagen kann die Kühlwalzentemperatur durch geeignete technische Maßnahmen leicht innerhalb von 2 K konstant gehalten werden. Üblicherweise wird in der Praxis zum Regeln der Temperatur an der Kühlwalze ein Kühlfluid durch die Kühlwalze gepumpt. Die Temperatur wird üblicherweise im Rücklauf des Kühlfluids von der Walze gemessen. Unter Inkaufnahme einer Differenz zur Temperatur an der Oberfläche der Walze und zur Temperatur der Folie wird angenommen, dass die Rücklauftemperatur jedenfalls etwa der Oberflächentemperatur der Walze entspricht.

Selbstverständlich wäre es auch möglich, die Temperatur der Folie und/oder der Walzenoberfläche zu messen, beispielsweise über ein berührungsloses Infrarotmessverfahren.

Damit der aus der Düse austretende Schmelzefilm möglichst dicht auf der Oberfläche der Kühlwalze aufliegt, wird vorgeschlagen, ein Luftmesser, ein Luftrakel, eine Vakuumbox und/oder eine Luftbürste einzusetzen. Diese arbeiten mithilfe eines Luftstroms. Dadurch wird der Einzug von Luft zwischen Kühlwalze und Folie vermieden, weil der Einzug von Luft zu einer verzögerten Abkühlung und damit zu Trübungen der Folie oder zur Verschlechterung anderer Eigenschaften führen kann.

Zwischen der Kühlwalzenanordnung und dem Querstrecken kann die Folienbahn durch eine Heizstation geführt werden. Als eine "Heizstation" im Sinne der hier vorliegenden Anmeldung sei eine solche Station verstanden, welche mit einem aktiven Heizmittel dazu eingerichtet ist, die Temperatur der vorbeilaufenden Folienbahn zu halten oder zu erhöhen. Hierzu soll nicht der einfach im Betrieb sich aufheizende Maschinenrahmen gezählt werden. Vielmehr sei ein aktives Heizmittel nur dann als solches zu verstehen, wenn es zum Heizen eigenständig betrieben werden kann, insbesondere also einen Zulauf und einen Rücklauf für ein Heizfluid wie beispielsweise Wasser oder Öl aufweist, und/oder einen Stromanschluss. In einem einfachen Fall kann es sich beispielsweise um eine Heizwalze handeln, bevorzugt in ihrem Inneren mittels Fluid beheizt oder mittels Elektrizität beheizt, oder beispielsweise von außen oder innen über einen Laserstrahl beheizt, handeln, oder es kann sich beispielsweise um einen Wärmestrahler handeln, oder um einen Wärmeofen, durch welchen die Folienbahn läuft. Bei einem Aufheizen der Folienbahn zwischen dem ersten Streckschritt an der Kühlwalzenanordnung und dem zweiten Streckschritt in Querrichtung wird es leichter, auch den zweiten Streckschritt noch mit schmelzeförmiger Folienbahn durchzuführen, vor allem weil vorher bereits eine Kühlwalze der Folienbahn Wärmeenergie entzogen hat.

Die Temperatur der Folienbahn kann während des Querstreckschritts geregelt werden, was zu verlässlicheren Folienergebnissen führen kann.

Nach gegenwärtiger Einschätzung der Erfinder ist es aber bei geeigneter Konstellation der Anlage nicht notwendig, die Temperatur der Folienbahn während des Querstreckschritts zu regeln oder die Folienbahn durch eine Heizstation zu fahren.

In konstruktiver Ausführung des Erfindungsaspekts kann die Folienbahn mittels zweier rotierender und verstellbarer Scheiben dem Querstrecken unterworfen werden. Eine Breitstreckstation mit zwei solchen Scheiben kann sehr kompakt bauen und dennoch ein hohes Maß an Verstellbarkeit für den Prozess bieten.

Insbesondere ist denkbar, dass die nach der eingangs der Kühlwalzenanordnung bewirkten Längsverstreckung noch zu bewirkende Querverstreckung der Folienbahn über zwei randseitig der Folienbahn zugeordnete rotierende Scheiben erzwungen wird, über welche die Folienbahn mit mindestens der Schmelztemperatur geführt wird, wobei die Folienbahn maximal etwa den halben Umfang der Scheiben zwischen einer Auflaufposition und einer Ablaufposition einhüllt und die Scheiben hinsichtlich der gedachten Verbindungslinie zwischen Auflaufposition und Ablaufposition um einen Winkel $\alpha$ gegenüber der Vertikalen geneigt sind. Vor allem wenn die Folienbahn vollständig schmelzeförmig vorliegt, brauchen für die gewünschte Querverstreckung nur geringe Zugkräfte quer zur Extrusionsrichtung aufgebracht zu werden, was von den geneigt zur Vertikalen verlaufenden Scheiben ohne weiteres und mit geringem Aufwand bewirkt werden kann.

Bevorzugt ist der Winkel der Scheiben verstellbar, um unterschiedliche Verstreckungsverhältnisse quer zur Extrusionsrichtung einstellen zu können und auch das Anfahren einer solchermaßen ausgebildeten Vorrichtung zu erleichtern.

Alternativ oder kumulativ zu der konstruktiven Ausführung mit zwei rotierenden Scheiben wird vorgeschlagen, dass die Folienbahn mittels zweier divergierender Bänder dem Querstreckschritt unterworfen wird.

Insbesondere ist denkbar, dass die Folienbahn nach der Längsverstreckung randseitig zwischen endlos umlaufenden Bänderpaaren eingespannt wird und die Bänderpaare in Extrusionsrichtung betrachtet einen sich vergrößernden Abstand voneinander einnehmen, sodass die Folienbahn bei dem Durchlauf randseitig in den Bänderpaaren eingespannt wird und aufgrund des sich allmählich vergrößernden Abstandes derselben quer zur Extrusionsrichtung verstreckt wird.

Der Fachmann wird erkennen, dass aufgrund der erfindungsgemäß nur geringen erforderlichen Kräfte auch eine Vielzahl weiterer Lösungen zur Durchführung der für die Querverstreckung erforderlichen Querbewegungen zur Verfügung steht.

Es kann vorgesehen sein, die Folienbahn während des Querstreckens über einen Formschluss seitlich zu halten, insbesondere randseitig formschlüssig einzuspannen, um das Einleiten der Zugkräfte quer zur Extrusionsrichtung zu verbessern.

Nach dem Querstrecken kann die Schicht der Folienbahn in den folienförmigen Zustand abgekühlt sein, oder aber noch schmelzeförmig vorliegen. Im letzteren Falle ist vorgesehen, die Folienbahn anschließend abzukühlen, bis sie folienförmig ist, wozu beispielsweise die Führung über mindestens eine Kühlwalze und/oder ein Beaufschlagen mit einem Kühlluftstrom in Betracht kommen.

Es kann vorgesehen sein, dass die Folienbahn in folienförmigem Zustand der Schicht zwischen der Kühlwalzenanordnung und dem Querstrecken einem Längs-Recken und/oder einem Tempern unterworfen wird.

Das Längs-Recken kann mit einer Längsreckeinrichtung (als "MDO" bezeichnet) bewirkt werden, bei welcher die Folienbahn in der Regel zwischen einer Halte- und einer Reckwalze um mehr als 5 % der Ursprungslänge, ohne weiteres bis zum 10fachen der Ursprungslänge und darüber hinaus, verlängert wird. Wegen des folienförmigen Zustands wird von einem "Recken" der Folienbahn bzw. der Schicht gesprochen.

Beim Tempern wird die laufende Folienbahn einer Temperaturbehandlung unterworfen, üblicherweise mit einer Temperwalze oder mit einer mehrere Temperwalzen umfassenden Temperstrecke. Die Temperbehandlung besteht darin, mittels eines aktiven Heiz- oder Kühlmittels auf die Temperatur in der Folienbahn Einfluss zu nehmen, um die Temperatur der Folienbahn zu halten, nur leicht abzukühlen oder leicht zu erhöhen. Beispielsweise kann eine Temperwalze mit einer Zuführung, einer inneren Führung und einer Abführung für ein Fluid an einen Fluidkreislauf angeschlossen sein, in welchem das Fluid, vor allem Wasser oder Öl, aktiv geheizt, gekühlt und oder temperaturgemessen werden kann. In einem einfachen Beispiel wird im Fluidkreislauf die Rücklauftemperatur des Fluids gemessen und daraus unter Inkaufnahme eines geringen Fehlers auf die Temperatur der Walze geschlossen. Das Tempern kann so eingestellt sein, dass die laufende Folienbahn beispielsweise eine Temperaturänderung von +/- 50 K, +/- 30 K, +/-10 K oder weniger erfährt, bezogen auf den Unterschied der Temperaturen der Folienbahn einerseits im Zulauf auf die Temperwalze, andererseits im Ablauf von der Temperwalze.

Es versteht sich, dass im Rahmen der hier vorliegenden Anmeldung in technischen, mittleren Temperaturen die Rede ist. Die Temperatur des Kunststoffs kann innerhalb der Folienbahn sowohl im schmelzeförmigen Zustand als auch im folienförmigen Zustand leicht um 2 K oder mehr schwanken.

Nach einem zweiten Aspekt der vorliegenden Erfindung löst die gestellte Aufgabe eine Vorrichtung zum Herstellen einer Folienbahn aus thermoplastischem Kunststoff, umfassend einen mit einer Breitschlitzdüse kommunizierenden Extruder und eine der Breitschlitzdüse nachgeordnete Walze, über welche die aus der Breitschlitzdüse als Schmelze mit einer Schicht austretende Folienbahn abführbar ist, sowie eine Kühlwal-zenanordnung direkt nach der Breitschlitzdüse, und eine im weiteren Durchlauf an der selben Vorrichtung angeordnete Querstreckstation, wobei die Vorrichtung dazu eingerichtet ist, die Folienbahn im Betrieb mit einer oberhalb eines Schmelzbereichs der Schicht liegenden Temperatur in schmelzeförmigem Zustand der Kühlwalzenanordnung und der Querstreckstation zuzuführen.

Vorstehend wurde bereits erläutert, dass die Vorrichtung dann besonders kompakt und dennoch sehr effizient bauen kann, wenn sowohl die Kühlwalzenanordnung als auch die Querstreckstation jeweils mit schmelzeförmiger Folienbahn den Verstreckprozess durchführen können, also nur ein bloßes Ziehen der Schmelze durchführen müssen.

Mit anderen Worten kann die Vorrichtung zum Herstellen einer Folienbahn aus thermoplastischem Kunststoff Einrichtungen zum Längs- und Querverstrecken der Folienbahn aufweisen, wobei die Folienbahn mit einer mindestens dem Schmelzbereich entsprechenden Temperatur den Einrichtungen zum Längs- und Querverstrecken zuführbar ist, wobei Zuführ- und/oder Regelmittel vorgesehen und dazu eingerichtet sind, die Folienbahn in Schmelzeform den beiden Einrichtungen zuzuführen.

Die Einrichtung zum Längsverstrecken der Folienbahn soll von der Kühlwalze gebildet sein, welche der Breitschlitzdüse nachgeordnet ist und welche unmittelbar mit der als Schmelze aus der Breitschlitzdüse austretenden Folienbahn beaufschlagt werden.

Es ist also eine von einer klassischen Flachfolienextrusionsanlage bekannte Kühlwalze vorgesehen, welche zwei verschiedene Funktionen übernimmt: Einerseits kann sie mit einer Oberflächenumfangsgeschwindigkeit rotieren, welche höher liegt, als die Extrusionsgeschwindigkeit aus der Breitschlitzdüse beträgt. Dies führt zu einer Längsstreckung der Folienbahn. Gleichzeitig ist die Walze als Kühlwalze ausgebildet, also eine Fluidzuführung für ein Kühlfluid aufweisend, mit welchem die Walze auf einer Temperatur unterhalb der Schmelztemperatur und unterhalb der Zulauftemperatur der Folienbahn zu der Walze gehalten wird.

Beispielsweise kann die Kühlwalze zwischen 10 K und 200 K kühler sein als die auf sie auflaufende Schmelze.

Generell sei darauf hingewiesen, dass im Rahmen der hier vorliegenden Anmeldung das "Regeln" als Oberbegriff verstanden wird. Ein Regeln beinhaltet also auch ein Steuern, insbesondere aber ein Regeln im technisch exakten Sinne, also mit einem Abgleich zwischen Soll-Werten und tatsächlich gemessenen Ist-Werten.

Es wird vorgeschlagen, dass die Vorrichtung eine Bahnführungsgeometrie für einen ersten und für einen zweiten Bahnlauf aufweist, um zwischen zwei Betriebsarten zu wählen, nämlich einerseits dem ersten Bahnlauf unter Einbeziehung der Querstreckstation, andererseits dem zweiten Bahnlauf unter Umgehung der Querstreckstation., wobei unter einem Umgehen der Querstreckstation auch eine solche Konstellation verstanden werden soll, bei welcher zwar die Elemente der Querstreckstation durchlaufen werden, diese aber keine Querstreckkräfte auf die Folienbahn ausüben. Beispielsweise im Falle rotierender Scheiben als Querstreckstation können diese zueinander parallel gestellt werden, oder im Falle von endlos umlaufenden Transportbändern können diese zueinander parallel gestellt werden.

Alternativ oder kumulativ wird vorgeschlagen, dass ein Steuermittel vorgegeben ist, um das Verhältnis zweier Betriebsarten der Vorrichtung zueinander zu beeinflussen. Beispielsweise kann für ein Herstellen der Folienbahn wie bei einer Flachfolienextrusion die Kühlwalze gleich nach der Breitschlitzdüse so kühl eingestellt werden, dass schon vor Erreichen einer Querstreckstation, beispielsweise schon beim Verlassen der Kühlwalze, kein schmelzeförmiger Zustand mehr vorliegt, sondern die Folie bereits erstarrt ist. Oder es wird im Gegensatz dazu eine Betriebsart eingestellt, bei welcher ein schnelles Abkühlen vermieden wird und die Folienbahn so warm wie möglich bis zum Querstrecken geführt wird, wobei nur so weit heruntergekühlt wird, dass sich die Folienbahn besser führen und von Walzen ablösen lässt. Oder es kann idealerweise ein oder mehrere oder stufenlos jeder Betriebspunkt zwischen diesen beiden Extrema eingestellt werden.

Konstruktiv wird für die Querstreckstation vorgeschlagen, dass die Einrichtung zum Querverstrecken der Folienbahn zwei voneinander beabstandete und den Rändern der Folienbahn zugeordnete Scheiben aufweist, über welche die Folienbahn zwischen einem Auflaufbereich und einem Ablaufbereich unter teilweiser Umschlingung des Umfanges führbar ist, wobei die Scheiben mit einer Verstelleinrichtung im Bereich der gedachten Verbindungslinie zwischen dem Auflaufbereich und dem Ablaufbereich um einen Winkel $\alpha$ aus der Vertikalen drehbar angeordnet sind.

Ferner kann vorgesehen sein, dass die der Führung der Folienbahn dienenden Umfangsbereiche der Scheiben mit Mitteln zum Halten der Folienbahn ausgebildet sind. Hier kommen beispielsweise radial vorstehende Nadeln oder ein die Scheiben zwischen dem Auflaufbereich und dem Ablaufbereich umschlingender Riemen in Betracht.

Es wurde bereits erwähnt, dass die Einrichtung zum Querverstrecken der Folienbahn alternativ zwei voneinander beabstandete und den Rändern der Folienbahn zugeordnete Paare endlos umlaufender Bänder umfassen kann, die jeweils einen Bandspalt definieren, in welchem die Folienbahn randseitig einklemmbar ist, wobei der Abstand zwischen den Paaren endlos umlaufender Bänder in Durchlaufrichtung der Folienbahn betrachtet zunehmend ausgebildet ist.

Dem Fachmann ist klar, dass die hier aufgezählten Lösungen zur Durchführung einer Querverstreckung nur als Beispiele dienen und es physikalisch viele Möglichkeiten gibt, eine Querbewegung zu erzielen.

In jedem Fall kann vorgesehen sein, die Einrichtung zum Querverstrecken der Folienbahn in einem wärmedämmenden und gegebenenfalls aktiv beheizten Gehäuse unterzubringen, um sicherzustellen, dass während der Querverstreckung der Folienbahn diese oder zumindest eine Schicht der Folienbahn eine Temperatur aufweist, welche oberhalb des Schmelzbereichs liegt.

Die Vorrichtung kann für jeden der vorgeschlagenen Verfahrensschritte eine Station aufweisen.

Es wurde bereits erwähnt, dass im Sinne der Erfindung die Folienbahn nicht zwingend aus nur einer Schicht eines thermoplastischen Kunststoffs bestehen muss, sondern auch mehrschichtig ausgebildet sein kann, wobei die einzelnen Schichten sowohl ausgleichen als auch aus unterschiedlichen Polymeren bestehen können.

Die Erfindung zeigt einige Möglichkeiten auf, der Folie oder Schmelze auf eine recht einfache Art eine zusätzliche Orientierung in Querrichtung zu geben. Die Lösung ist relativ einfach und damit auch sehr preiswert und führt zu anderen Eigenschaften der Folie.

Die Erfindung wird nachstehend anhand zweier Ausführungsbeispiele unter Bezugnahme auf die Zeichnung näher erläutert. Es zeigen

    Figur 1 in stark schematisierter Darstellung eine Vorrichtung gemäß der Erfindung;

    Figur 2 eine Ansicht auf die Einrichtung zum Querverstrecken der Folie gemäß Figur 1;

    Figur 3 die Seitenansicht der Vorrichtung gemäß Figur 2;

    Figur 4 die Wirkungsweise der Vorrichtung gemäß Figuren 2 und 3; sowie

    Figur 5 schematisch in einer seitlichen Ansicht eine alternative Ausführungsform einer Flachfolienanlage.

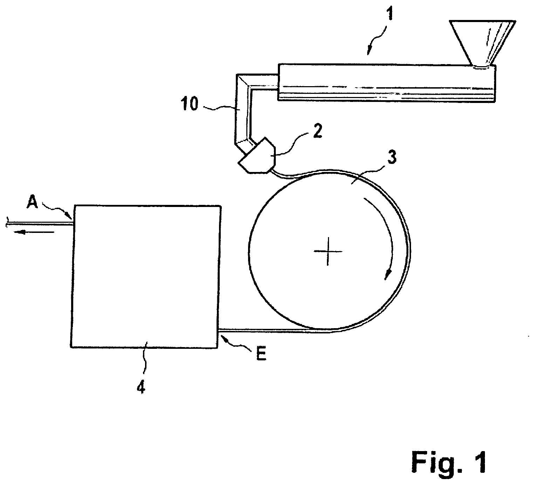

Aus der Figur 1 ist in einer schematisierten stark vereinfachten Darstellung eine Vorrichtung zum Herstellen einer Folienbahn aus thermoplastischem Kunststoff nach dem so genannten Flachfolienextrusionsverfahren ersichtlich. Die Vorrichtung umfasst einen Extruder 1, der über eine Schmelzezuleitung 10 mit einer Breitschlitzdüse 2 kommuniziert, aus welcher der im Extruder 1 bereitete Strom einer Schmelze aus dem thermoplastischen Kunststoff auf eine gekühlte Gießwalze 3 aufgelegt wird, die im eingezeichneten Drehsinn betrieben wird und die Schmelze von der Breitschlitzdüse unter Ausbildung einer Folienbahn abführt. Es versteht sich, dass anstelle der hier dargestellten Vorrichtung mit lediglich einem Extruder 1 auch mehrere Extruder zur Herstellung einer entsprechend mehrschichtigen Folienbahn aus thermoplastischem Kunststoff vorgesehen sein können.

Die Gießwalze 3 wird im eingezeichneten Drehsinn mit einer Umfangsgeschwindigkeit betrieben, die oberhalb derjenigen Geschwindigkeit eingeregelt wird, welche synchron zur Austrittsgeschwindigkeit der als Schmelze vorliegenden Folienbahn aus der Breitschlitzdüse 2 sein würde, mit der Folge, dass die aus der Breitschlitzdüse 2 in der sogenannten Extrusionsrichtung austretende Folienbahn Zugkräften in Extrusionsrichtung unterliegt, und insoweit längs verstreckt wird. Das Maß der aufgebrachten Zugkräfte und die sich dadurch einstellende Längsverstreckung wird über die vorangehend geschilderte Erhöhung der Umfangsgeschwindigkeit der Gießwalze 3 gegenüber der Synchrongeschwindigkeit zur Austrittsgeschwindigkeit der Folienbahn aus der Breitschlitzdüse 2 bestimmt. Da überdies die Folienbahn bei ihrem Austritt aus der Breitschlitzdüse 2 verfahrensbedingt eine mindestens der Schmelzetemperatur derselben entsprechende Temperatur aufweist, erfolgt die vorangehend erläuterte Längsverstreckung zu einem Zeitpunkt, zu dem die Folienbahn noch schmelzflüssig ist, sodass nur geringe Kräfte aufgebracht werden müssen.

Die solchermaßen auf der Gießwalze 3 bereits längs verstreckte Folienbahn wird in der in der Figur 1 schematisch dargestellten Weise nachfolgend einer Einrichtung 4 zum Querverstrecken der Folienbahn zugeführt, und zwar einem mit E bezeichneten Einlauf derselben, wobei die Folie nach dem Durchlauf der Einrichtung 4 zum Querverstrecken derselben diese Einrichtung 4 an dem mit A gekennzeichneten Auslauf verlässt und einer weiteren Bearbeitung, beispielsweise Aufwicklung und dergleichen zugefügt werden kann.

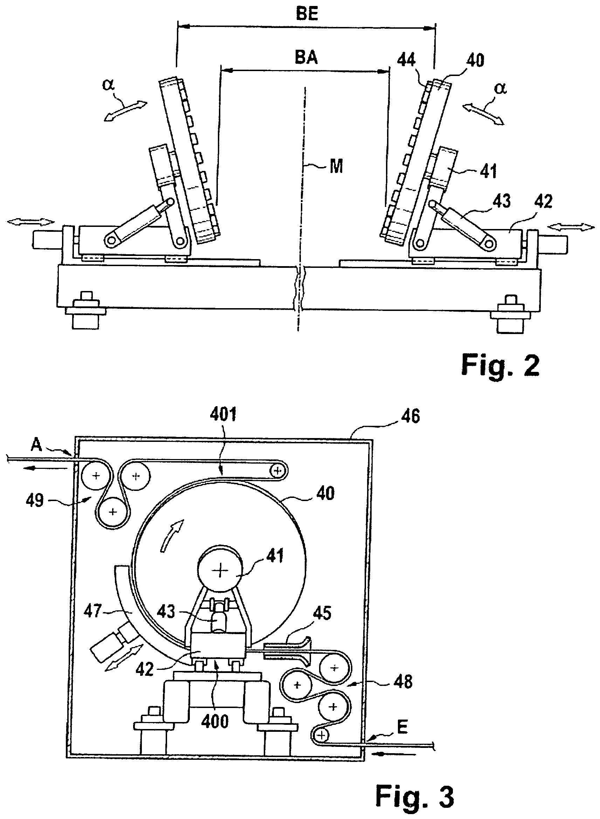

Der genaue Aufbau der Einrichtung 4 zum Querverstrecken der Folienbahn ist aus den Figuren 2 und 3 ersichtlich.

Die Folienbahn tritt am Einlauf E in ein die Einrichtung 4 umgebendes wärmedämmendes Gehäuse 46 ein und wird zunächst über mehrere Aufheizwalzen 48 geführt, die so temperiert werden, dass die Temperatur der Folienbahn wieder mindestens der Schmelzetemperatur derselben entspricht, sofern nicht die Folienbahn bei ihrem Eintritt in die Einrichtung 4 am Einlauf E ohnehin eine Temperatur noch oberhalb der Schmelzetemperatur derselben aufweist.

Über eine Zentrierung 45 läuft die solchermaßen auf eine Temperatur oberhalb der Schmelzetemperatur derselben temperierte Folienbahn randseitig auf zwei Scheiben 40 auf, die mittels eines Antriebs 41 mit entsprechender Lagerung in der eingezeichneten Orientierung drehbar antreibbar sind. Man erkennt, dass der Aufbau der Einrichtung spiegelbildlich zur in Figur 2 ersichtlichen Mittelachse M ausgeführt ist, sodass die hier abgegebenen Erläuterungen zur Einrichtung 4 spiegelbildlich sowohl für die rechte als auch die linke Vorrichtungshälfte in Bezug auf die Mittellinie M gelten.

Die Scheiben sind hinsichtlich ihrer Position zur Mittelachse M mittels einer Breitenverstelleinheit 42 einstellbar, um eine Anpassung an die Ausgangsbreite BA der Folienbahn, d.h. die Breite im Bereich der Zentrierung 45, anzupassen.

Darüber hinaus ist eine Winkelverstelleinheit 43 vorgesehen, die es erlaubt, die Scheiben um einen Winkel $\alpha$ aus der Vertikalen geneigt zu lagern.

Wie insbesondere aus der Figur 3 ersichtlich läuft nämlich die über die Zentrierung 45 zugeführte und mindestens Schmelzetemperatur aufweisende Folienbahn etwa bei 6 Uhr an einer Auflaufposition 400 auf den Umfang der Scheiben 40 auf und umschlingt beim weiteren Durchlauf durch die Einrichtung etwa den halben Umfang der Scheiben 40, bis sie an einer mit 401 gekennzeichneten Ablaufposition bei etwa 12 Uhr wieder vom Umfang der Scheiben abgehoben wird und über mehrere Umlenkwalzen und Temperierwalzen 49 dem Auslauf A aus der Vorrichtung 4 zugeführt wird.

Da mittels der Winkelverstelleinheit 43 die gedachte Verbindungslinie zwischen der Ablaufposition 401 und der Auflaufposition 400 der Scheiben um den Winkel $\alpha$ aus der Vertikalen drehbar ist, erfährt demzufolge die randseitig auf dem Scheibenumfang aufliegende Folienbahn beim Durchlauf von der Auflaufposition 400 zur Ablaufposition 401 eine Verstreckung quer zur Extrusionsrichtung, in dessen Folge sich die Ursprungsbreite BA in die Endbreite BE der Folienbahn durch Einwirkung der quer zur Extrusionsrichtung gerichteten Zugkräfte ändert.

Da die Folienbahn während des Durchlaufs durch die Einrichtung 4 auf einer mindestens der Schmelzetemperatur derselben entsprechenden Temperatur verharrt, sind die zur Ausübung dieser Breitenzunahme erforderlichen Zugkräfte quer zur Extrusionsrichtung relativ gering und können von den solchermaßen gegenüber der vertikalen geneigt angeordneten Scheiben 40 eingebracht werden.

Zum Anfahren einer solchen Einrichtung 4 werden die Scheiben 40 zunächst von der Winkelverstelleinheit 43 in der vertikalen Ausrichtung gelagert, d.h. der Winkel $\alpha$ geht gegen Null und die Folienbahn erfährt keine Querverstreckung und Breitenzunahme. Unter kontinuierlichem Durchlauf der Folienbahn durch die Einrichtung 4 werden sodann die Scheiben 40 mittels der Winkelverstelleinheit 43 auf die gewünschten Neigungswinkel $\alpha$ verfahren, sodass sich allmählich die gewünschte Querverstreckung und Breitenzunahme der Folienbahn einstellt.

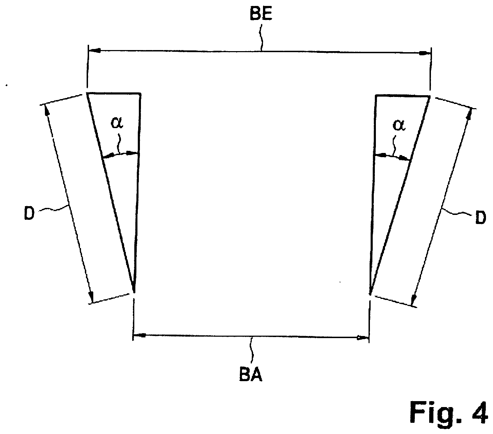

Wie insbesondere aus der Darstellung gemäß Figur 4 ersichtlich wird die Größe bzw. das Maß der Querverstreckung durch die Neigung d.h. den Neigungswinkel $\alpha$ der beiden Scheiben 40 bestimmt Das Verstreckverhältnis "R" lässt sich aus der Darstellung gemäß Figur 1 aus den eingezeichneten Größen bestimmen, wobei D den Durchmesser der Scheiben 40 bestimmt, $\alpha$ den Neigungswinkel derselben, BA die Ausgangsbreite der Folie und BE die Endbreite bzw. Fertigbreite der Folie bestimmt und zwischen BA und BE folgende Relation besteht:

$$BE = BA + 2 \cdot D \cdot \sin \alpha$$

Das Verstreckverhältnis R ergibt sich dann wie folgt:

$$R = \frac{BE}{BA} = 1 + \frac{2 \cdot D \cdot \sin \alpha}{BA}$$

.

Um die Aufbringung der für die Querverstreckung erforderlichen Zugkräfte auf die Folie zu verbessern, können die Scheiben 40 beispielsweise mit den Umfangsbereichen derselben zugeordneten Nadelhaltern 44 ausgestattet sein, welche jeweils Nadeln tragen, die die Folienbahn durchstoßen und somit einen Formschluss zwischen der Folienbahn und den Scheiben 40 herstellen und die Zugkräfte infolge der Neigung der Scheiben 40 um den Winkel $\alpha$ aus der Vertikalen nahezu verlustfrei in die Folienbahn einbringen. Die dabei eintretende Perforation der Randbereiche der Ferienbahn ist vertretbar, da zur Erzielung gleichmäßiger Ränder der Folienbahn diese vor dem Aufwickeln ohnehin noch einen Randbeschnitt erfährt, bei welchem die Perforationen abgetrennt werden.

Sofern in Abwandlung der vorangehend beschriebenen Ausführungsform die Folienbahn auf der Gießwalze 3 zunächst nicht längsverstreckt werden soll, sondern z.B. zur Erzielung eines hohen Glanzgrades zunächst auf eine Temperatur unterhalb der Schmelzetemperatur abgeschreckt wird, erscheint es vorstellbar, innerhalb der dargestellten Einrichtung 4 die Scheiben 4 auch mit einer gegenüber der Zuführgeschwindigkeit der Folienbahn am Einlass E höheren Umfangsgeschwindigkeit zu betreiben. In einem solchen Fall wurde die Folienbahn zunächst von den Aufheizwalzen wieder auf eine Temperatur oberhalb der Schmelzetemperatur aufgeheizt und dann beim Durchlauf durch die Einrichtung 4 vor dem Auflaufen auf die Scheiben 40 zunächst in Extrusionsrichtung, d.h. längs verstreckt und dann während des Aufliegens auf den Scheiben 40 quer zur Extrusionsrichtung verstreckt werden.

Ferner erkennt man in der Darstellung gemäß Figur 3, dass zumindest in einem Teilumschlingungsbereich der Scheiben 40 eine Heizeinrichtung 47, beispielsweise verstellbare Infrarotheizstrahler vorgesehen sein können, um zu verhindern, dass die Temperatur der Folienbahn während des Durchlaufs durch die Einrichtung 4 und insbesondere während der Einwirkung der Scheiben 40 auf eine unterhalb der vorgesehenen Recktemperatur der Folienbahn liegende Temperatur fällt.

Mit der erfindungsgemäßen Vorrichtung und dem Verfahren ist es somit möglich, bei geringfügigem Aufwand eine nach dem Flachfolienverfahren aus einer Breitschlitzdüse extrudierte Folienbahn herzustellen, die ähnlich wie eine Blasfolie noch im schmelz-flüssigen Zustand sowohl in Extrusionsrichtung als auch quer dazu eine gewisse Verstreckung erfährt, um somit auf einfache Art und Weise eine zusätzliche Orientierung in Längs- und Querrichtung zu erhalten. Die Temperatur der Folienbahn während der Längs- und Querverstreckung kann je nach Anlagenerfordernis weitgehend ungeregelt geführt werden, solange sichergestellt ist, dass mindestens Schmelzetemperatur vorliegt, oder aber es werden Temperatursensoren und entsprechende Temperierelemente, wie Walzen. Strahlungsheizungen und dergleichen vorgesehen, um eine kontrollierte Temperaturführung der Folienbahn während der Längs- und Querverstreckung zu erhalten.

Im Falle der Herstellung eines mehrschichtigen Verbundes zur Ausbildung der Folienbahn ist erfindungsgemäß vorgesehen, dass mindestens eine der Einzelschichten der Folienbahn die erfindungsgemäß vorgesehene Temperatur mindestens entsprechend der Schmelzetemperatur aufweist, während die Längs- und Querverstreckung durchgeführt wird.

Aufgrund des nur geringfügig erhöhten Anlagenaufwandes eignet sich die erfindungsgemäße Vorrichtung sowohl für die Herstellung neuer Vorrichtungen zur Herstellung von Folienbahnen als auch zur Nachrüstung von bereits bestehenden nach dem Flachfolienverfahren arbeitenden Vorrichtungen.

Durch die erfindungsgemäß vorgesehene Längs- und Querverstreckung der noch im Schmelzezustand vorliegenden Folienbahn werden Eigenschaften der Folie, z.B. Transparenz, Planlage und Festigkeit gesteigert, sodass eine solchermaßen nach dem Flachfolienextrusionsverfahren hergestellte Folienbahn als Ersatz für bisher nach dem Blasfolienverfahren gefertigte Folienbahnen dienen können und damit die Produktionsflexibilität der nach dem Flachfolienverfahren arbeitenden Anlagen weiter gesteigert wird, ohne den Investitionsbedarf über Gebühr zu steigern.

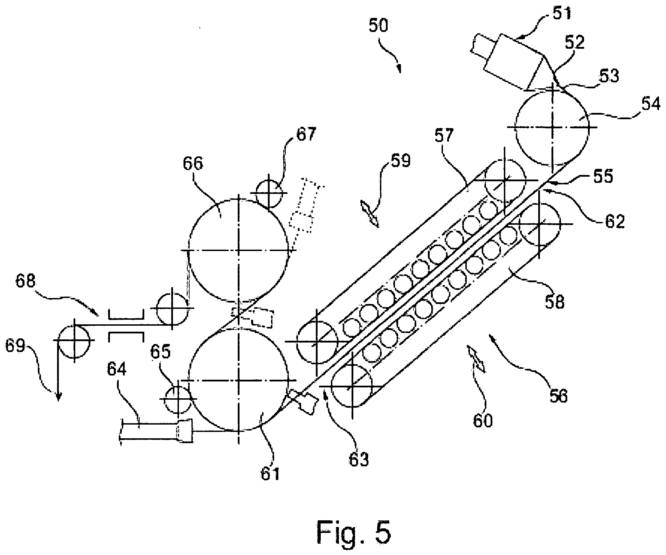

Die Flachfolienanlage 50 in Figur 5 besteht im Wesentlichen aus einem Extruder (nicht dargestellt), an welchen sich in einer Extrusionsrichtung eine Extrusionsdüse 51 mit einer Breitschlitzdüse 52 anschließt. Aus dieser tritt im Betrieb eine Folienbahn 53 aus, beispielsweise eine Polypropylen-Schmelze. Typische Werte für die Temperatur der Folienbahn 53 im Falle von Polypropylen betragen 210 °C bis 290 °C.

Unmittelbar nach der Breitschlitzdüse 52 läuft die Folienbahn 53 auf eine Kühlwalze 54 auf. Die Kühlwalze 54 kann beispielsweise bis maximal etwa 200 °C temperierbar sein. Als thermisches Fluid sei beispielsweise ein Wärmeträgeröl vorgesehen, welches durch einen Zulauf und einen Rücklauf (beide nicht dargestellt) zwischen einer Heizeinrichtung und der Kühlwalze 54 im Kreislauf gepumpt werden kann.

Im Betrieb läuft die Folienbahn 53 auf die kühlere Kühlwalze 54 auf und wird dadurch in ihren Eigenschaften leicht vorfixiert, bleibt aber schmelzeförmig. Beispielhafte Versuche der Erfinder haben gezeigt, dass die Folienbahn 53 aus Polypropylen an einem Ablauf 55 von der Kühlwalze 54 beispielsweise eine Temperatur zwischen 140 °C und 180 °C haben wird.

An den Ablauf 55 der Kühlwalze 54 schließt sich eine Querstreckstation 56 in Form zweier Querstreckraupen 57, 58 an, welche sich über eine Pneumatik (nicht dargestellt) an die Folienbahn 53 anstellen lassen. Die Pneumatik kann die beiden Querstreckraupen 57, 58 entlang von Bewegungsrichtungen 59, 60 bewegen.

Die Querstreckstation 56 kann optional mit einer höheren Fördergeschwindigkeit angetrieben werden als die Kühlwalze. Sie kann dann zusätzlich zum Querverstrecken auch ein Längsverstrecken bewirken, bei welchem die Folienbahn 53 im noch schmelzeförmigen Zustand längsgezogen wird.

Gleichzeitig befinden sich an den Rändern der Folienbahn 53 greifende Elemente der Querstreckraupen 57, 58 im Bezug auf die Extrusionsrichtung in divergierender Anordnung, sodass die Querstreckstation 56 für die Folie an einem Einlauf 62 eine geringere Breite bereitstellt als an einem Auslauf 63. Hierdurch wird ein Querziehen der schmelzeförmigen Folienbahn 53 bewirkt.

Nach dem Auslauf 63 aus der Querstreckstation 56 umläuft die Folienbahn 53 die Kühlwalze 61, welche beispielsweise auf eine Temperatur nahe der Raumtemperatur der Anlagenaufstellung gekühlt ist, beispielsweise auf einen Bereich zwischen 15 °C und 40 °C. Die Folienbahn 53 umläuft die Kühlwalze 61 mit einem großen Umschlingungswinkel, wobei gleichzeitig eine Absaugung 64 für einen guten Kontakt zwischen der Folienbahn 53 und der Oberfläche der Kühlwalze 61 sorgt, um einen Wärmeübergang von der Folienbahn 53 auf das Innere der Kühlwalze 61 zu unterstützen. Zusätzlich ist eine Anpresswalze 65 vorgesehen.

Eine weitere Kühlwalze 66 schließt sich an und wird anschließend von der Folienbahn 53 ebenfalls umlaufen. Auch diese kann beispielsweise etwa auf Raumtemperatur eingestellt sein, bevorzugt geringfügig wärmer als die erste Kühlwalze 61, beispielsweise in einem Temperaturbereich von etwa 25 °C bis 60 °C.

Der weiteren Kühlwalze 66 ist im hier gezeigten Ausführungsbeispiel eine Putzwalze 67 beigestellt.

Nach Durchlaufen auch der weiteren Kühlwalze 66, wobei die erste Kühlwalze 61 und die weitere Kühlwalze 66 insgesamt eine abschließende Kühlstation für die Folienbahn 53 darstellen, ist die Folienbahn 53 nicht mehr schmelzeförmig, sondern erstarrt. Die Folientemperatur ist mindestens hinsichtlich ihrer äußeren Schichten, bevorzugt jedoch in allen Schichten, unter die Rekristallisationstemperatur gesunken.

In einer Dickenmessstation 68 wird die resultierende Dicke der ablaufenden Folienbahn 69 ermittelt und protokolliert.

**Patentansprüche**

1. Verfahren zum Herstellen einer Folienbahn (53) aus thermoplastischem Kunststoff, bei welchem der Kunststoff in einer Schicht aus einer Breitschlitzdüse (2, 52) in einer Extrusionsrichtung extrudiert und später über eine Walze abgeführt wird, wobei auf die Folienbahn Zugkräfte in Extrusionsrichtung und quer zur Extrusionsrichtung ausgeübt werden, um die Folienbahn (53) längs und quer zu verstrecken, und wobei die Schicht alternativ einen folienförmigen oder einen schmelzeförmigen Zustand annehmen kann, wobei sich der folienförmige Zustand bei einem Abkühlen der Schicht unter einen Schmelzbereich einstellt bzw. wobei sich der schmelzeförmige Zustand bei einem Erwärmen der Schicht über einen Schmelzbereich einstellt, wobei die Folienbahn

   a. zunächst schmelzeförmig mit einer Extrusionsgeschwindigkeit am bzw. unmittelbar nach Austritt der Breitschlitzdüse (2, 52) extrudiert und

   b. direkt anschließend schmelzeförmig auf eine Kühlwalzenanordnung geführt wird, wobei die Folienbahn um eine Kühl- (54) oder Glättwalze herum mit einer höher als die Extrusionsgeschwindigkeit liegenden Umfangsgeschwindigkeit geführt wird, sodass die Folienbahn einem Längsstrecken unterworfen wird,

   c. später aus der Kühlwalzenanordnung herausgeführt und

   d. danach einem Querstrecken unterworfen wird,

   wobei beide Streckschritte an der Schicht mit schmelzeförmigem Zustand durchgeführt werden, sodass beide Male das Strecken in Form eines Ziehens von Schmelze erfolgt.

2. Verfahren nach Anspruch 1, *dadurch gekennzeichnet, dass* die Folienbahn (53) auf der Kühl- (54) oder Glättwalze bis zum folienförmigen Zustand abgekühlt und in diesem Zustand von der Kühl- (54) oder Glättwalze abgelöst wird..

3. Verfahren nach einem der vorstehenden Ansprüche, *dadurch gekennzeichnet, dass* die Schicht der Folienbahn (53) während des Streckens eine höher als ihre Kristallitschmelztemperatur liegende Temperatur aufweist.

4. Verfahren nach einem der vorstehenden Ansprüche, *dadurch gekennzeichnet, dass* die Schicht der Folienbahn (53) während des Streckens eine höher als ihre Rekristallisationstemperatur liegende Temperatur aufweist.

5. Verfahren nach einem der vorstehenden Ansprüche, *dadurch gekennzeichnet, dass* zum Ablösen der Folienbahn (53) von der Kühlwalze (54) eine Ablösevorrichtung eingesetzt wird, insbesondere mit einem Über- oder Unterdruckerzeugungsmittel für Luft.

6. Verfahren nach einem der vorstehenden Ansprüche, *dadurch gekennzeichnet, dass* die Folienbahn (53) zwischen der Kühlwalzenanordnung und dem Querstrecken durch eine Heizstation geführt wird.

7. Verfahren nach einem der vorstehenden Ansprüche, *dadurch gekennzeichnet, dass* die Temperatur der Folienbahn (53) während des Querstreckens geregelt wird.

8. Verfahren nach einem der Ansprüche 1 bis 6, *dadurch gekennzeichnet, dass* die Temperatur der Folienbahn (53) während des Querstreckens nicht geregelt wird.

9. Verfahren nach einem der vorstehenden Ansprüche, *dadurch gekennzeichnet, dass* die Folienbahn (53) mittels zweier rotierender und verstellbarer Scheiben (40) dem Querstrecken unterworfen wird.

10. Verfahren nach einem der vorstehenden Ansprüche, *dadurch gekennzeichnet, dass* die Folienbahn (53) mittels zweier divergierender Bänder dem Querstrecken unterworfen wird.

11. Verfahren nach einem der vorstehenden Ansprüche, *dadurch gekennzeichnet, dass* die Schicht der Folienbahn (53) nach dem Querstrecken einen schmelzeförmigen Zustand aufweist.

12. Verfahren nach einem der vorstehenden Ansprüche, *dadurch gekennzeichnet, dass* die Folienbahn (53) nach dem Querstrecken durch eine Kühlstation geführt wird, bis die Schicht der Folienbahn (53) einen folienförmigen Zustand aufweist.

13. Verfahren nach einem der vorstehenden Ansprüche, *dadurch gekennzeichnet, dass* die Folienbahn (53) in folienförmigem Zustand zwischen der Kühlwalzenanordnung und dem Querstrecken einem Längs-Recken und/oder einem Tempern unterworfen wird.

14. Vorrichtung zum Herstellen einer Folienbahn (53) aus thermoplastischem Kunststoff, umfassend einen mit einer Breitschlitzdüse (52) kommunizierenden Extruder und eine der Breitschlitzdüse (52) nachgeordnete Walze (54), über welche die aus der Breitschlitzdüse als Schmelze mit einer Schicht austretende Folienbahn (53) abführbar ist, sowie eine Kühlwalzenanordnung direkt nach der Breitschlitzdüse (52), und eine im weiteren Durchlauf an derselben Vorrichtung angeordnete Querstreckstation (56),

**dadurch gekennzeichnet, dass**

die Vorrichtung dazu eingerichtet ist, die Folienbahn (53) im Betrieb mit einer oberhalb eines Schmelzbereichs der Schicht liegenden Temperatur in schmelzeförmigem Zustand der Kühlwalzenanordnung und der Querstreckstation (56) zuzuführen, und zwar gemäß einem Verfahren nach einem der vorstehenden Ansprüche.

15. Vorrichtung nach Anspruch 14, **dadurch gekennzeichnet, dass** die Querstreckstation (56) zwei voneinander beabstandete und den Rändern der Folienbahn (53) zugeordnete Scheiben (40) aufweist, über welche die Folienbahn (53) zwischen einem Auflauf- und einem Ablaufbereich unter teilweiser Umschlingung des Umfangs derselben führbar ist, wobei die Scheiben (40) mittels einer Verstelleinrichtung im Bereich der gedachten Verbindungslinie zwischen der Ablaufposition (400) und der Auflaufposition (401) um einen Winkel ($\alpha$) aus der Vertikalen drehbar angeordnet sind.

16. Vorrichtung nach Anspruch 14 oder 15, **dadurch gekennzeichnet, dass** sie eine Bahnführungsgeometrie für einen ersten und für einen zweiten Bahnlauf aufweist, um zwischen zwei Betriebsarten zu wählen, nämlich einerseits dem ersten Bahnlauf unter Einbeziehung der Querstreckstation, andererseits dem zweiten Bahnlauf unter Umgehung der Querstreckstation.

## Claims

1. Method for producing a film web (53) from thermoplastic material, in which the plastic material is extruded in one layer from a wide slot nozzle (2, 52) in an extrusion direction and later is guided off via a roller, whereby tensile forces are applied to the film web in the extrusion direction and transverse to the extrusion direction in order to stretch the film web (53) longitudinally and transverse, and whereby the layer, alternatively, can assume a film-like or a melt-like state, whereby the film-like state is established upon the layer cooling below a melting range and/or whereby the melt-like state is established upon the layer being heated above a melting range, whereby the film web

   a. is initially extruded in melt-like form with an extrusion speed during and/or directly after exit from the wide slot nozzle (2, 52), and
   b. the film web immediately thereafter is guided in the form of a melt onto a cooling roller arrangement, whereby the film web is guided about a cooling (54) or smoothing roller at a circumferential speed that is higher than the extrusion speed such that the film web is subjected to a longitudinal stretching,
   c. the film web is later guided out of the cooling roller arrangement, and
   d. then is subjected to a transverse stretching,

   whereby both stretching steps are performed on the layer in the melt-like state such that both times the stretching takes place by drawing the melt.

2. Method according to claim 1, **characterised in that** the film web (53) is cooled on the cooling (54) or smoothing roller down to the film-like state and is detached from the cooling (54) or smoothing roller while it is in this state.

3. Method according to any one of the preceding claims, **characterised in that** the temperature of the layer of the film web (53) during the stretching is higher than its crystallite melting temperature.

4. Method according to any one of the preceding claims, **characterised in that** the temperature of the layer of the film web (53) during the stretching is higher than its recrystallisation melting temperature.

5. Method according to any one of the preceding claims, **characterised in that** a detaching facility, in particular comprising a positive or negative pressure generating means for air, is used for detaching the film web (53) from the cooling roller (54).

6. Method according to any one of the preceding claims, **characterised in that** the film web (53) is guided through a heating station between the cooling roller arrangement and the transverse stretching.

7. Method according to any one of the preceding claims, **characterised in that** the temperature of the film web (53) during the transverse stretching is being regulated.

8. Method according to any one of the claims 1 to 6, **characterised in that** the temperature of the film web (53) during the transverse stretching is not being regulated.

9. Method according to any one of the preceding claims, **characterised in that** the film web (53) is being subjected to the transverse stretching by means of two rotating and adjustable discs (40).

10. Method according to any one of the preceding claims, *characterised in that* the film web (53) is being subjected to the transverse stretching by means of two diverging belts.

11. Method according to any one of the preceding claims, *characterised in that* the layer of the film web (53) is in a melt-like state after the transverse stretching.

12. Method according to any one of the preceding claims, *characterised in that* the film web (53) is guided through a cooling station after the transverse stretching until the layer of the film web (53) is in a film-like state.

13. Method according to any one of the preceding claims, *characterised in that* the film web (53), in the film-like state, is subjected to a longitudinal stretching and/or a tempering between the cooling roller arrangement and the transverse stretching.

14. Device for producing a film web (53) from thermoplastic material, comprising an extruder that communicates with a wide slot nozzle (52), and, downstream from the wide slot nozzle (52), a roller (54) by means of which the film web (53) exiting from the wide slot nozzle as a melt with a layer, can be guided off, as well as a cooling roller arrangement right after the wide slot nozzle (52), and a transverse stretching station (56) that is arranged further downstream on the same device,
*characterised in that*
the device, in operation, is set up to feed the film web (53) with a temperature above a melting range of the layer in the melt-like state to the cooling roller arrangement and the transverse stretching station (56), and to do so according to a method according to any one of the preceding claims.

15. Device according to claim 14, *characterised in that* the transverse stretching station (56) comprises two discs (40), situated at a distance from each other and allocated to the margins of the film web (53), by means of which the film web (53) can be guided between a run-on and a run-off section while partially looping around the circumference thereof, whereby the discs (40) are arranged such that they can be rotated by an angle ($\alpha$) with respect to the vertical line by means of an adjustment facility in the area of the virtual connecting line between the run-off position (400) and the run-on position (401).

16. Device according to claim 14 or 15, *characterised in that* it comprises a web guiding geometry for a first and for a second web run in order to select from two operating modes, namely, on the one hand, the first web run including the involvement of the transverse stretching station, on the other hand the second web run bypassing the transverse stretching station.

**Revendications**

1. Procédé pour la fabrication d'une feuille en continu (53) en matière synthétique thermoplastique, dans laquelle la matière synthétique est extrudée en une couche d'une filière à fente large (2, 52) dans un sens d'extrusion, puis évacuée par un rouleau, des forces de traction étant exercées sur la feuille en continu dans le sens d'extrusion et transversalement au sens d'extrusion afin d'étirer la feuille en continu (53) dans le sens longitudinal et dans le sens transversal et la couche pouvant prendre alternativement un état sous forme de feuille ou de matière fondue, l'état sous forme de feuille cessant en dessous d'une plage de fusion lors d'un refroidissement de la couche et/ou l'état sous forme de matière fondue cessant au-dessus d'une plage de fusion lors d'un réchauffement de la couche,
la feuille en continu

    a. étant extrudée d'abord à l'état fondu à une vitesse d'extrusion à la sortie et/ou directement après la sortie de la filière à fente large (2, 52) et
    b. directement guidée à l'état fondu sur un ensemble formant rouleau refroidisseur, la feuille en continu étant guidée, autour d'un rouleau refroidisseur (54) ou niveleur, à une vitesse périphérique supérieure à la vitesse d'extrusion de façon à ce que la feuille en continu soit soumise à un étirage longitudinal,
    c. étant retirée ultérieurement de l'ensemble formant rouleau refroidisseur,
    d. puis étant soumise à un étirage transversal,

les deux phases d'étirage étant effectuées sur la couche à l'état fondu de façon à ce que le processus soit réalisé, les deux fois, sous la forme d'un étirage de la matière fondue.

2. Procédé conformément à la revendication n°1, *caractérisé en ce que* la feuille en continu (53) est refroidie jusqu'à l'état de feuille sur le rouleau refroidisseur (54) ou niveleur et est décollée, dans cet état, du rouleau refroidisseur (54) ou niveleur.

3. Procédé conformément à l'une des revendications précédentes, *caractérisé en ce que* la couche de la feuille en continu (53) présente, pendant l'étirage, une température supérieure à sa température de fusion des cristallites.

**4.** Procédé conformément à l'une des revendications précédentes, *caractérisé en ce que* la couche de la feuille en continu (53) présente, pendant l'étirage, une température supérieure à sa température de recristallisation.

**5.** Procédé conformément à l'une des revendications précédentes, *caractérisé en ce qu'*un dispositif de décollage est utilisé pour décoller la feuille en continu (53) du rouleau refroidisseur (54), en particulier avec un moyen de génération de surpression ou de dépression pour l'air.

**6.** Procédé conformément à l'une des revendications précédentes, *caractérisé en ce que* la feuille en continu (53) est guidée par une station de chauffage entre l'ensemble formant rouleau refroidisseur et l'étirage transversal.

**7.** Procédé conformément à l'une des revendications précédentes, *caractérisé en ce que* la température de la feuille en continu (53) est régulée pendant l'étirage transversal.

**8.** Procédé conformément à l'une des revendications n°1 à n°6, *caractérisé en ce que* la température de la feuille en continu (53) n'est pas régulée pendant l'étirage transversal.

**9.** Procédé conformément à l'une des revendications précédentes, *caractérisé en ce que* la feuille en continu (53) est soumise à l'étirage transversal au moyen de deux disques (40) rotatifs et réglables.

**10.** Procédé conformément à l'une des revendications précédentes, *caractérisé en ce que* la feuille en continu (53) est soumise à l'étirage transversal au moyen de deux bandes divergentes.

**11.** Procédé conformément à l'une des revendications précédentes, *caractérisé en ce que* la couche de la feuille en continu (53) présente un état fondu après l'étirage transversal.

**12.** Procédé conformément à l'une des revendications précédentes, *caractérisé en ce que* la feuille en continu (53) est guidée par une station de refroidissement après l'étirage transversal jusqu'à ce que la couche de la feuille en continu (53) présente un état de feuille.

**13.** Procédé conformément à l'une des revendications précédentes, *caractérisé en ce que* la feuille en continu (53) à l'état de feuille est soumise, entre l'ensemble formant rouleau refroidisseur et l'étirage transversal, à un étirage longitudinal et/ou un processus de recuit.

**14.** Dispositif pour la fabrication d'une feuille en continu (53) en matière synthétique thermoplastique, comprenant une extrudeuse communiquant avec une filière à fente large (52) et un rouleau (54) en aval de la filière à fente large (52), par lequel la feuille en continu (53) sortant de la filière à fente large (52) sous forme de matière fondue avec une couche peut être évacuée, ainsi qu'un ensemble formant rouleau refroidisseur juste après la filière à fente large (52) et une station d'étirage transversal (56) disposée en suivant sur le même dispositif,
*caractérisé en ce que*
le dispositif est configuré pour amener la feuille en continu (53) à l'état fondu à l'ensemble formant rouleau refroidisseur et à la station d'étirage transversal (56) pendant le service à une température se situant au-dessus d'une plage de fusion de la couche, et ce selon un procédé conformément à l'une des revendications précédentes.

**15.** Dispositif conformément à la revendication n°14, *caractérisé en ce que* la station d'étirage transversal (56) présente deux disques (40) espacés l'un de l'autre et affectés aux bords de la feuille en continu (53), par lesquels la feuille en continu (53) peut être guidée entre une zone de montée et une zone de descente avec enlacement partiel de la périphérie de ces dernières, les disques (40) étant disposés de façon rotative à un angle ($\alpha$) par rapport à la direction verticale au moyen d'un dispositif de réglage dans la zone de la ligne de liaison imaginaire entre la position de descente (400) et la position de montée (401).

**16.** Dispositif conformément à la revendication n°14 ou n°15, *caractérisé en ce qu'il* présente une géométrie de guidage de bande pour un premier et un deuxième passage de bande afin de choisir entre deux modes de service, notamment d'une part le premier passage de bande par le biais de la station d'étirage transversal, d'autre part le deuxième passage de bande en contournant la station d'étirage transversal.

**Fig. 1**

**Fig. 2**

**Fig. 3**

Fig. 4

EP 2 559 546 B1

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0319401 B1
- US 5709932 A
- EP 1900498 A1
- US 20070267774 A1
- WO 2007034029 A1
- US 3471606 A